# EUROPEAN PATENT APPLICATION

(11) **EP 4 632 576 A1**
(43) Date of publication of application: **15.10.2025**
(21) Application number: 25169468.3
(22) Date of filing: 09.04.2025
(51) Int. Cl.: G06F 9/50, H04N 19/40, H04N 21/23, H04N 21/234

(54) **METHODS AND SYSTEMS FOR MULTI-FORMAT MEDIA PROCESSING**

(30) Priority: 12.04.2024 US 202463633095 P; 12.04.2024 US 202463633100 P; 02.04.2025 US 202519098481
(71) Applicant: TVU Networks Corporation, Cupertino, CA 95014 (US)
(72) Inventor: Shen, Paul, Woodside, California 94062 (US); Xu, Pu, Cupertino, California 95014 (US); Crosson, James David, Raleigh, North Carolina 27610 (US)
(74) Representative: Hoeger, Stellrecht & Partner Patentanwälte mbB

(57) **Abstract**

Methods and systems for media processing are provided which are capable of accepting any media input and converting the media input for one or more media outputs. A plurality of video sources are provided, each of which produce a corresponding video stream. A microservice server is provided which comprises microservices adapted to at least one of decode, encode, scale, route, and transmit the corresponding video streams. A plurality of computational resources available for use by the microservices are provided. A resource management subsystem is provided for orchestrating the microservices according to project parameters of one or more media projects, allocating and coordinating the plurality of the computational resources required by the microservices for the one or more media projects, and outputting corresponding media processed by the microservices for the one or more media projects.

## Description

This application claims the benefit of U.S. Provisional Application No. 63/633,095 filed on April 12, 2024, U.S. Provisional Application No. 63/633,100 filed on April 12, 2024 and U.S. Application No. 19/098,481 filed on April 2, 2025, all of which are incorporated herein in their entirety and made a part hereof by reference for all purposes.

### BACKGROUND OF THE INVENTION

The present invention relates to the field of media processing and routing. More specifically, the present invention relates to improved methods and systems for processing and routing of media received in any format that is to be output in any format and which dynamically utilizes resources. The present invention also relates to an object-based user interface that facilitates automated media processing and routing.

Prior art processing and routing of media has typically been a complex process involving hardware, wiring, and software, along with dedicated resources for each function. Such systems often face challenges in handling various input and output formats, resource allocation, and operational complexity. Such complexity also leads to high costs and management challenges.

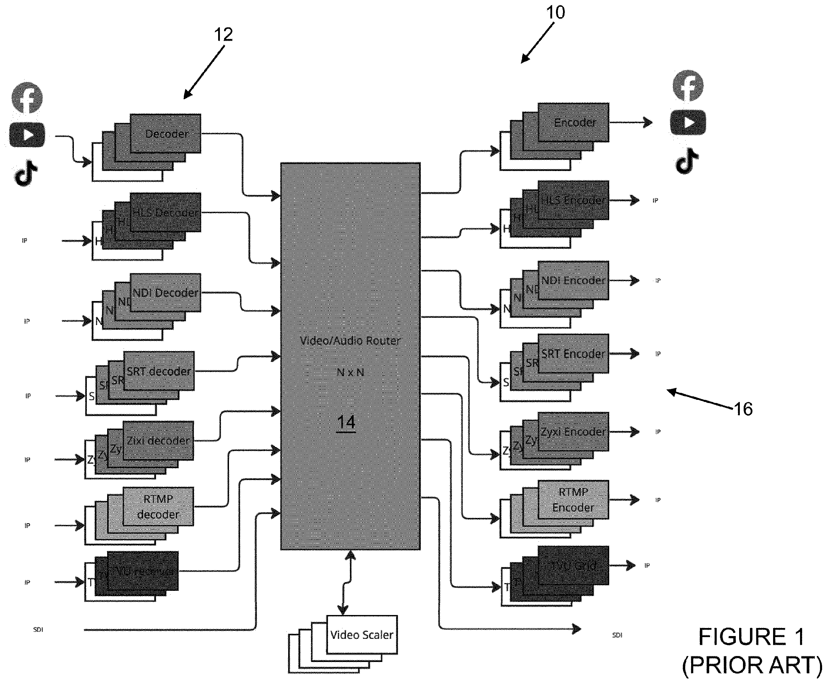

Figure 1 shows an example of prior art architecture 10 for media processing and routing, which utilizes multiple hardware decoders 12 for decoding media received in various formats. The decoded media is then typically passed through a hardware-based NxN audio/video router 14, which sends the media to a designated hardware-based encoder 16, depending on the encoding format required by the destination. Multiple hardware decoders and encoders are required for the various possible encoding formats. Furthermore, when the input media format, such as video resolution, is different from the output media format, this will require routing of the signal through an additional processor, such as video scaler, to convert the input media to match the required output format.

With such complicated hardware-based routing systems, the system (both hardware and software) needs to be set up for each media file or media project that is processed. Typically, such setup routines cannot be saved for later use for the same media file or media project (e.g., a TV show, live event, commercial, or the like).

It would be advantageous to provide methods and systems for processing and routing of media content that are software-based and that provide ease of use and repeatability. It would also be advantageous to provide a more versatile and efficient system to address the challenges and limitations of the prior art hardware-based systems.

It would also be advantageous to provide a simplified user interface for a video processing system that enables automated video processing and routing. It would be further advantageous to provide an object-based system that allows for repetitive use of the same video processing and routing parameters, rather than requiring the resetting of physical switches and software settings each time a similar video source is processed (e.g., the same TV show or the same live event format).

The methods and systems of the present invention provide the foregoing and other advantages.

### SUMMARY OF THE INVENTION

The present invention relates to methods and systems for processing and routing of media received in any format that is to be output in any format and which dynamically utilizes resources.

An example embodiment of a media processing system capable of accepting any media input and converting the media input for one or more media outputs may comprise: a plurality of video sources, each of the plurality of video sources producing a corresponding video stream; a microservice server comprising microservices adapted to at least one of decode, encode, scale, route, and transmit the corresponding video streams; a plurality of computational resources available for use by the microservices; and a resource management subsystem for orchestrating the microservices according to project parameters of one or more media projects, allocating and coordinating the plurality of the computational resources required by the microservices for the one or more media projects, and outputting corresponding media processed by the microservices for the one or more media projects.

The media projects may be object-based media projects. A project object defines the project parameters for the media project. The project parameters may comprise identifying information for one or more of the video sources to be included in the media project, one or more output destinations, one or more media output destination encoding formats, and corresponding video and audio bit rates.

Based on the project parameters, the resource management subsystem identifies the microservices required for each of the media projects based on the one or more video sources identified in the project object and the one or more output destinations. The resource management subsystem may then define one or more process workflows through interconnected microservices for carrying out the project parameters for each of the media projects and launching the identified microservices to carry out the media projects.

Each of the plurality of computational resources may comprise or utilize one or more of on-premises computational resources and cloud-based computational resources.

A resource agent may be associated with each of the plurality of computational resources which analyzes, monitors, and reports on resource availability of the corresponding computational resource.

The resource management subsystem may comprise: an orchestration service for determining which of the microservices are required for completion of each of the media projects based on the project parameters and for determining interconnections between the microservices; a central resource management system that monitors and manages the computational resources based on communications from the resource agents; and a task allocation service for initiating the one or more process workflows for each of the media projects based on information provided by the orchestration service and by the central resource management system.

The orchestration service may enable dynamic allocation of the computational resources by the task allocation service based on real-time changes in availability of the computational resources.

The video sources may be added to the project object via a drag and drop user interface.

The project object may be provided to an object microservice. The object microservice provides information on the project object and identification of the video sources for the media project to the system backend. The system backend provides the video sources and the project object to the orchestration service. The orchestration service may update the system backend with status information on usage and availability of the computational resources.

The project object may be reusable for media projects that are repeatable.

The system may further comprise a plurality of distribution systems for distributing the media to one or more media output destinations. The distribution systems may comprise one or more of a satellite uplink, an over the air broadcasting system, an SDI router, and an IP streaming system.

The media input and the media output may comprise one of SDI, RTMP, RTSP, TS, SPTS, MPTS, HLS, SRT, NDI, Zyxi, YouTube, Facebook, TikTok, Zoom, TVU Grid, TVU Anywhere, TVU Partyline, and TVU RPS, and the like.

The present invention also includes a method for processing any media input and converting the media input into one or more media outputs. The method may comprise:
providing a plurality of video sources, each of the plurality of video sources producing a corresponding video stream; providing a microservice server comprising microservices adapted to at least one of decode, encode, scale, route, and transmit the corresponding video streams;
providing a plurality of computational resources available for use by the microservices; and
providing a resource management subsystem for orchestrating the microservices according to project parameters of one or more media projects, allocating and coordinating the plurality of the computational resources required by the microservices for the one or more media projects, and
outputting corresponding media processed by the microservices for the one or more media projects.

The method embodiments of the present invention may also include various features and functionality of the system embodiments discussed above.

### BRIEF DESCRIPTION OF THE DRAWINGS

The present invention will hereinafter be described in conjunction with the appended drawing figures, wherein like reference numerals denote like elements, and:
Figure 1 shows a prior art system for media processing;
Figure 2 shows a high-level block diagram of a media processing system in accordance with an example embodiment of the present invention;
Figure 3 shows a block diagram of a media processing system in accordance with an example embodiment of the present invention;
Figure 4 shows a process flow diagram of an example embodiment of a media processing system in accordance with the present invention; and
Figure 5 shows an example user interface for a media processing system in accordance with an example embodiment of the present invention.

### DETAILED DESCRIPTION

The ensuing detailed description provides exemplary embodiments only, and is not intended to limit the scope, applicability, or configuration of the invention. Rather, the ensuing detailed description of the exemplary embodiments will provide those skilled in the art with an enabling description for implementing an embodiment of the invention. It should be understood that various changes may be made in the function and arrangement of elements without departing from the spirit and scope of the invention as set forth in the appended claims.

The present invention relates to software-based methods and systems for processing, routing and distributing media that are capable of receiving any media input format and distributing it to one or more destinations in various formats. The present invention dynamically utilizes resources, both in the cloud and on-premises, and is managed through an object-based control system. Its architecture includes a microservice server, computational resources, agents, resource management, task services, and an orchestration service, optimizing operational efficiency and flexibility in media handling.

The present invention also relates to a user interface or API for media processing systems, specifically designed to simplify operations required for video processing and video routing. The present invention provides an intuitive user interface that minimizes complexity, allowing operators to focus on content and project management. Using an API simplifies the implementation of media processing software. The process involves defining 'Project Objects' to which users can add various output formats and destinations. Once created, a user can simply drag and drop input sources (e.g., live or recorded media files) into the project object. An API can be used to connect an input object (media files) to the project object. The platform then automatically procures necessary resources, decodes, scales, and encodes the media signal into the specified formats as required by the destination(s) defined by the project object, and outputs the encoded signal to the corresponding destinations(s) in the defined format.

The methods and systems of the present invention are adapted to:
1. Accept any media input format and convert it for delivery to multiple destinations in various media formats;
2. Dynamically utilize computational resources, whether cloud-based or on-premises, according to the needs of the media project;
3. Simplify operations through an object-based control system, by enabling a process where users create 'project objects' as output objects, specifying desired output formats and destinations, reducing the need for dedicated resources for each function, leading to cost savings;
4. Provide an intuitive user interface that simplifies media routing and transformation processes (e.g., decoding and re-encoding);
5. Provide the ability for users to drag and drop input sources into these project objects;
6. Enable automatic resource procurement and signal routing, including decoding, scaling, and encoding to meet specifications defined by the project objects; and
7. Provide enhanced focus on content and project management due to reduced operational complexity.

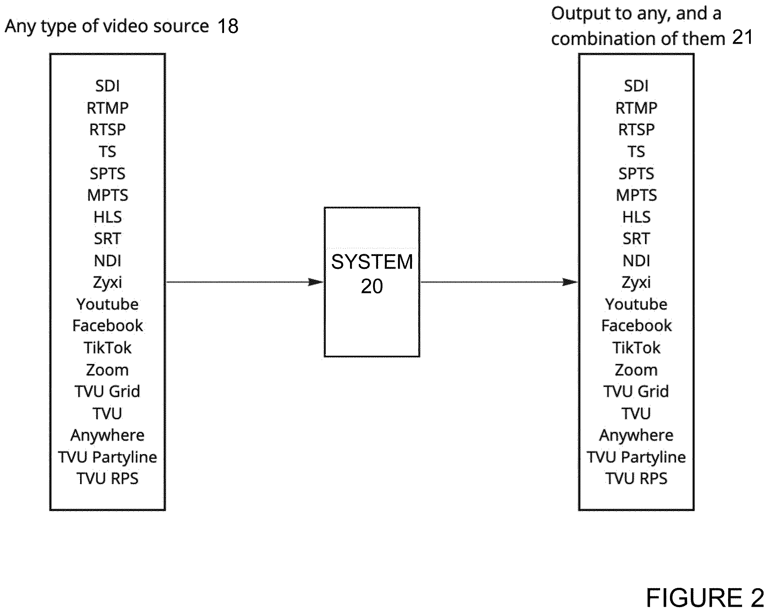

Figure 2 shows a high-level block diagram of the present invention. As shown in Figure 2, system 20 of the present invention accepts multiple input video sources 18 in any type of video format. The system 20 then determines, based on requirements of a project, which input source is to be routed to one or more particular outputs 21, and decodes and re-encodes the input sources as necessary for the designated output(s) 21. Thus, a video source 18 provided in any encoding format can be output to one or more destinations 21 in any corresponding encoding format. For example, the media input and the media output may comprise any one of SDI, RTMP, RTSP, TS, SPTS, MPTS, HLS, SRT, NDI, Zyxi, YouTube, Facebook, TikTok, Zoom, TVU Grid, TVU Anywhere, TVU Partyline, TVU RPS, or the like.

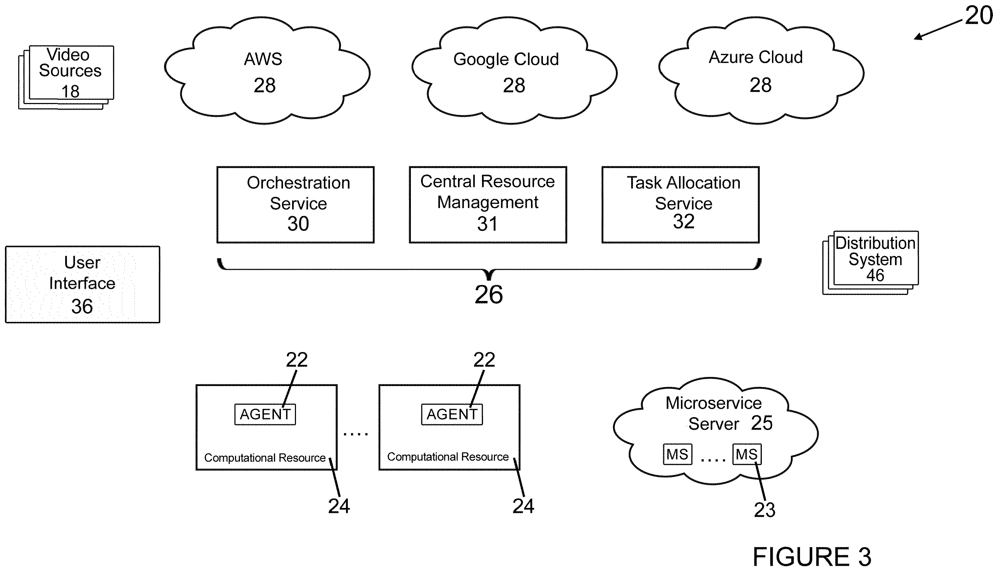

Figure 3 shows a block diagram of an example embodiment of a system 20 in accordance with the present invention. The system 20 may comprise a plurality of video sources 18, each of the plurality of video sources producing a corresponding video stream. A microservice server 25 is provided which comprise microservices 23 adapted to at least one of decode, encode, scale, route, and transmit the corresponding video streams. The system also comprises a plurality of computational resources 24 available for use by the microservices 23. A resource management subsystem 26 is provided for orchestrating the microservices 23 according to project parameters of one or more media projects, allocating and coordinating the plurality of the computational resources 24 required by the microservices 23 for the one or more media projects, and outputting corresponding media processed by the microservices 23 for the one or more media projects.

Agents 22 may be installed on the computational resources 24 that analyze, monitor, and report resources available at their corresponding computational resource 24 to the resource management subsystem 26. In particular, the agents 22 may determine the status and available capabilities of their respective computational resource 24 for the microservices 23 required for the current media projects. The computational resources 24 may utilize or comprise cloud-based services 28 (e.g., AWS, AZURE, Google Cloud) and/or be virtual machines or hardware-based on physical computer devices located on or off premises. The agents 22 may each comprise a process running on each computational resource 24. The agents 22 (or a separate program running on or in communication with each computational resource 24) are also responsible for downloading any necessary applications to their respective computational resource 24 for media processing. Alternatively, the applications may be in docker form and accessed from a central server.

The microservices 23 may be hardware and/or software adapted to at least one of decode, encode, scale, route, and transmit the corresponding video streams, any of which may be cloud-based or located on a physical computer system.

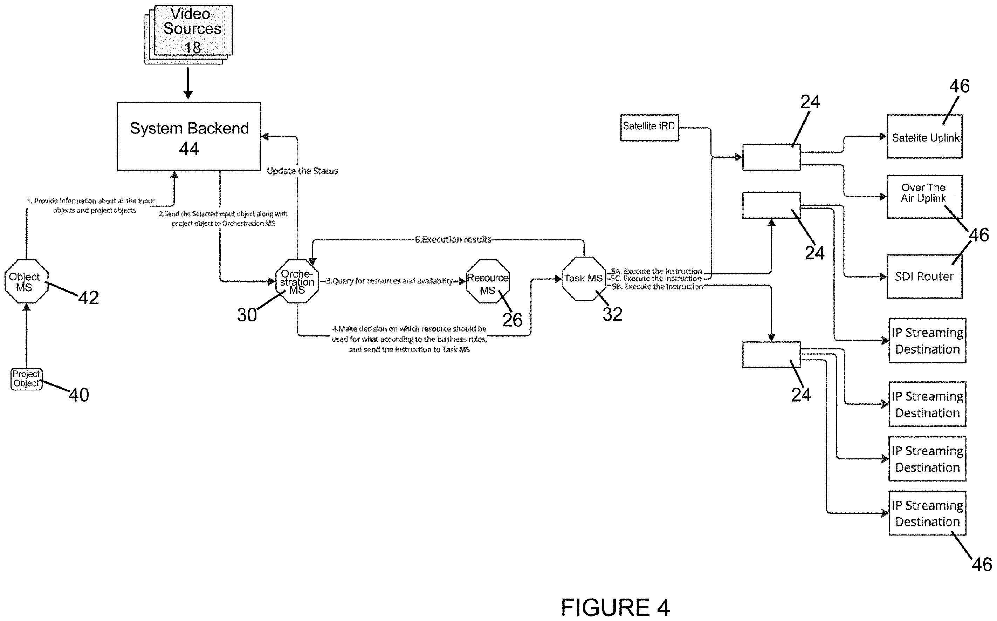

The media projects are object-based media projects (as discussed below in connection with Figure 4). A project object defines the project parameters for the media project. The project parameters comprise identifying information for one or more of the video sources to be included in the media project, one or more output destinations, one or more media output destination encoding formats, and corresponding video and audio bit rates.

Based on the project parameters, the resource management subsystem 26 identifies the one or more microservices 23 required for each of the media projects based on the one or more video sources 18 identified in the project object and the one or more output destinations.

The resource management subsystem 26 defines one or more process workflows through interconnected microservices 23 for carrying out the project parameters for each of the media projects and launching the identified microservices 23 to carry out the media projects.

The resource management subsystem 26 may comprise an orchestration service 30 for determining which of the microservices 23 are required for completion of each of the media projects based on the project parameters and for determining interconnections between the microservices 23, a central resource management system 31 that monitors and manages the computational resources 24 based on communications from the agents 22, and a task allocation service 32 for initiating the one or more process workflows for each of the media projects based on information provided by the orchestration service 30 and by the central resource management system 31.

The central resource management system 31 oversees and manages use of all computational resources 24 based upon communications from the agents 22. The central resource management system 31 may also directly monitor the status of the computational resources 24. The central resource management system 31 provides a comprehensive overview of all available computational resources 24 and their current statuses, facilitating efficient allocation of computational resources 24 for the microservices 23 needed for a media project. The orchestration service 30 plans and connects functional modules (e.g., microservices 23 such as decoders, encoders, video scalers, routers, transmitters, and the like) based on project requests. The orchestration service 30 analyzes incoming project requests, creates a task list, and determines the necessary interconnection of various microservices 23 required to complete the media project. The orchestration service 30 may also determine the best allocation of computational resources 24 needed to complete the media project, including dynamic resource allocation based on real-time changes in resource availability. The task allocation service 32 initiates the process workflow for the media project, assigning microservices 23 to appropriate computational resources 24 based on resource availability and requirements as communicated by the orchestration service 30, based on data from the orchestration service 30 and the central resource management system 31.

The various components of the system 20 may be located on-premises and/or at different physical and cloud-based locations, and may be connected by a combination of wired and/or wireless networks now known or to be developed (e.g., the Internet, an intranet, an extranet, EPN, VPN, LAN, WLAN, and the like).

Figure 4 shows an example embodiment of a process flow in accordance with the present invention. Initially a project object 40 is defined. The project object 40 identifies various project parameters for the media project (e.g., a TV show, live broadcast, sporting event, IP video stream, and the like). The project parameters may include the destination or output address(es) for the media project, as well as one or more of the encoding format and corresponding parameters, resolution, video bit rate, and audio bit rate corresponding to the destination address(es) of the media project. As multiple destinations may be defined in the project object 40, corresponding encoding formats for each of such destinations are also defined as necessary. For example, the program object 40 may define a configuration of outputs for a specific program, such as The Morning Show, with, for example, three outputs, one output may be a 1080i SDI output, another output may be an RTMP 1080i 5Mbps, and the last output may be an HLS 1080p output.

Identifying information for the one or more video sources 18 needed for a media project may be added to the project object 40 via a drag and drop user interface 36 associated with the system frontend. An object microservice 42 provides information on the project object 40 and the input objects (video sources 18) to the system backend 44. The project object 40 then automatically identifies the appropriate decoder (e.g., one of the microservices 23) for decoding the video source as well as the appropriate encoder (e.g., another of the microservices 23) associated with the destination defined by the project object 40. The system backend 44 then sends the selected input objects along with the project object 40 to the orchestration service 30. The project object 40 may be saved and reused for media projects that repeat (such as a daily or weekly television show, a network football game, or the like).

As described above, the orchestration service 30 will determine the best allocation of microservices 23 (e.g., encoders, decoders, transmitters, and the like) for completion of the media project, as well as determine the computational resources 24 required and available for use by the microservices 23 based on information on resource availability received from the resource management system 31 (as provided by the agents 22 as discussed above in connection with Figure 3). Such determinations may be made by the orchestration service 30 based on predetermined business rules for resource allocation. For example, when a project object 40 contains one output destination pointing to a specific SDI output, then that specific output process should reside on the physical hardware (resource 24) where the SDI output ports are located. The input signal is then routed to the computational resource 24 containing that output process.

The orchestration service 30 may update the system backend 44 with the current resource status and provide instructions to the task allocation service 32 regarding which microservices 23 and computational resources 24 are to be used to fulfill the parameters of the project object 40. After decoding the media input and reencoding it for the corresponding destination(s), the microservices 23 will then output (e.g., via the corresponding computational resource 24) the encoded media to the appropriate distribution system 46 for distribution of the media to one or more media output destinations. Such systems 46 may comprise one or more of a satellite uplink, an over the air broadcasting uplink, or an SDI router for distributing the media file to the appropriate destination(s). The distribution system 46 can also output an IP video stream to various destinations.

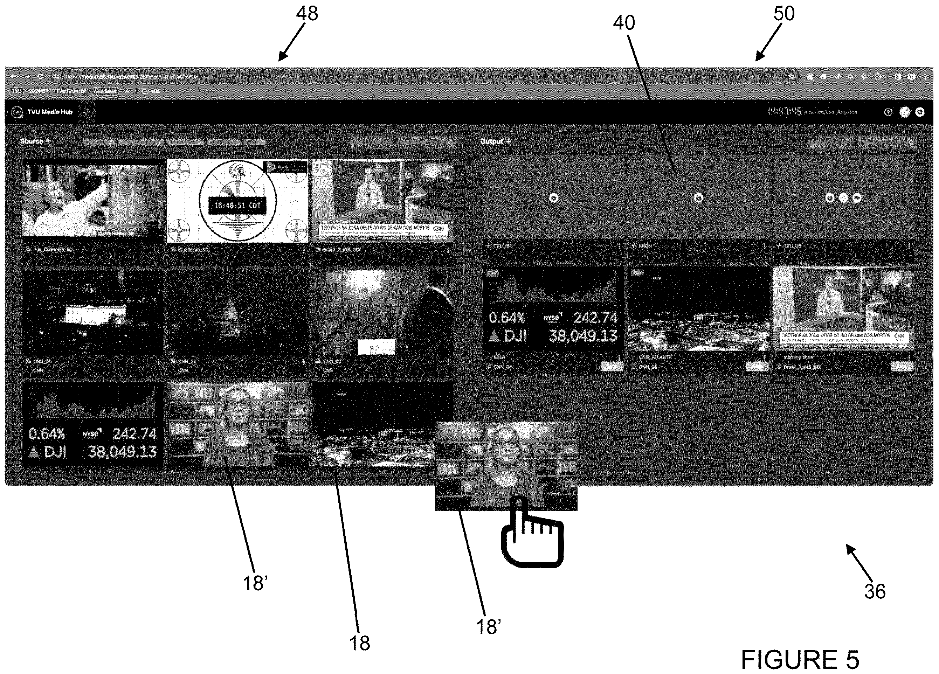

Figure 5 shows an example embodiment of a user interface 36 in accordance with the present invention. The user interface is associated with the system frontend. The user interface 36 may provide video sources 18 in a tiled format on a first portion 48 of a computer touch screen and an output section on a second portion 50 of the touch screen which includes output tiles corresponding to the project objects 40. With the present invention, the user is enabled to touch and drag any of the video sources 18 from the first portion 48 into a project object 40 on the second portion 50. For example, Figure 5 shows the selection and finger drag of video source 18' from the first portion 48 to the second portion 50.

As discussed above, the project object 40 identifies various parameters for the media project (e.g., a TV show, live broadcast, sporting event, and the like). The parameters may include the destination or output address(es) for the media project, as well as one or more of the encoding format(s) and corresponding parameters, resolution, video bit rate, and audio bit rate corresponding to the destination address(es) of the media project. As multiple destinations may be defined in the project object, corresponding encoding formats for each of such destinations are also defined.

The project object 40 then automatically identifies the appropriate microservice(s) 23 for decoding the selected video source(s) as well as the appropriate microservice(s) 23 for encoding/reencoding the video sources for each of the destinations defined by the project object 40. The project object 40 may be saved and reused for media projects that repeat (such as a daily or weekly television show, a network football game, or the like).

Upon adding an input source 18 to a project object 40, the system automatically procures necessary microservices 23 and corresponding computational resources 24, and handles decoding, scaling, encoding, and signal routing to one or more output destinations (e.g., a television channel, a YouTube channel, a streaming service, social media, and the like), as discussed above.

The present invention revolutionizes the traditional approach to media routing and transformation, offering a simplified user-friendly interface and automated processes that significantly reduce complexity and resource requirements in media production environments.

It should now be appreciated that the present invention provides advantageous methods and systems for media processing, routing and distribution.

Although the invention has been described in connection with various illustrated embodiments, numerous modifications and adaptations may be made thereto without departing from the spirit and scope of the invention as set forth in the claims.

## Claims

1. A media processing system capable of accepting any media input and converting the media input for one or more media outputs, comprising:
a plurality of video sources, each of the plurality of video sources producing a corresponding video stream;
a microservice server comprising microservices adapted to at least one of decode, encode, scale, route, and transmit the corresponding video streams;
a plurality of computational resources available for use by the microservices; and
a resource management subsystem for orchestrating the microservices according to project parameters of one or more media projects, allocating and coordinating the plurality of the computational resources required by the microservices for the one or more media projects, and outputting corresponding media processed by the microservices for the one or more media projects.

2. The media processing system of claim 1, wherein:
the media projects are object-based media projects;
a project object defines the project parameters for the media project; and
the project parameters comprise identifying information for one or more of the video sources to be included in the media project, one or more output destinations, one or more media output destination encoding formats, and corresponding video and audio bit rates.

3. The media processing system of claim 2, wherein, based on the project parameters, the resource management subsystem identifies the microservices required for each of the media projects based on the one or more video sources identified in the project object and the one or more output destinations.

4. The media processing system of claim 3, wherein the resource management subsystem defines one or more process workflows through interconnected microservices for carrying out the project parameters for each of the media projects and launching the identified microservices to carry out the media projects.

5. The media processing system of claim 4, wherein each of the plurality of computational resources comprises or utilize one or more of on-premises computational resources and cloud-based computational resources.

6. The media processing system of claim 4 or 5, wherein a resource agent is associated with each of the plurality of computational resources which analyzes, monitors, and reports on resource availability of the corresponding computational resource.

7. The media processing system of claim 6, wherein the resource management subsystem comprises:
an orchestration service for determining which of the microservices are required for completion of each of the media projects based on the project parameters and for determining interconnections between the microservices;
a central resource management system that monitors and manages the computational resources based on communications from the resource agents; and
a task allocation service for initiating the one or more process workflows for each of the media projects based on information provided by the orchestration service and by the central resource management system.

8. The media processing system of claim 7, wherein the orchestration service enables dynamic allocation of the computational resources by the task allocation service based on real-time changes in availability of the computational resources.

9. The media processing system of claim 7 or 8, wherein the video sources are added to the project object via a drag and drop user interface.

10. The media processing system of any one of claims 7 to 9, wherein:
the project object is provided to an object microservice;
the object microservice provides information on the project object and identification of the video sources for the media project to the system backend;
the system backend provides the video sources and the project object to the orchestration service.

11. The media processing system of claim 10, wherein the orchestration service updates the system backend with status information on usage and availability of the computational resources.

12. The media processing system of any one of claims 2 to 11, wherein the project object is reusable for media projects that are repeatable.

13. The media processing system of any one of claims 1 to 12, further comprising a plurality of distribution systems for distributing the media to one or more media output destinations.

14. The media processing system of claim 13, wherein the distribution systems comprise one or more of a satellite uplink, an over the air broadcasting system, an SDI router, and an IP streaming system.

15. The media processing system of claim 13 or 14, wherein the media input and the media output comprise one of SDI, RTMP, RTSP, TS, SPTS, MPTS, HLS, SRT, NDI, Zyxi, YouTube, Facebook, TikTok, Zoom, TVU Grid, TVU Anywhere, TVU Partyline, and TVU RPS.

16. A method for processing any media input and converting the media input into one or more media outputs, comprising:
providing a plurality of video sources, each of the plurality of video sources producing a corresponding video stream;
providing a microservice server comprising microservices adapted to at least one of decode, encode, scale, route, and transmit the corresponding video streams;
providing a plurality of computational resources available for use by the microservices;
and
providing a resource management subsystem for orchestrating the microservices according to project parameters of one or more media projects, allocating and coordinating the plurality of the computational resources required by the microservices for the one or more media projects, and outputting corresponding media processed by the microservices for the one or more media projects.
